# EUROPÄISCHE PATENTANMELDUNG

(11) **EP 0 882 523 A2**
(43) Veröffentlichungstag der Anmeldung: **09.12.1998**
(21) Anmeldenummer: 98109921.1
(22) Anmeldetag: 29.05.1998
(51) Int. Cl.: B08B 9/02

(54) **Reinigungseinrichtung**

(30) Priorität: 02.06.1997 DE 29709586 U; 10.07.1997 DE 29712155 U
(71) Anmelder: Beissner, Hans-Wilhelm, 21723 Hollern (DE)
(72) Erfinder: Beissner, Hans-Wilhelm, 21723 Hollern-Twielenfleth (DE)
(74) Vertreter: Bergmeier, Werner, Dipl.-Ing.

(57) **Zusammenfassung**

In einer Reinigungseinrichtung für Zylinder, insbesondere mit Innen- oder Außengewinde, sind mehrere Rundbürsten mittels jeweils einer Feststellschraube an einem Bürstenträger auswechselbar angeordnet. Der Bürstenträger ist um eine Zentralachse drehbar gelagert, wobei die Bürsten eine Orbitalbewegung um die Achse beschreiben und die Bürsten mittels einer Stelleinrichtung in Radialrichtung stufenlos verstellbar sind. Die Stelleinrichtung ist zweiteilig ausgebildet, wobei ein erster Teil der Bürstenträger und ein zweiter Teil ein Zustellring ist und sowohl Bürstenträger als auch Zustellring jeweils ein im Winkel zueinander versetztes Langloch zur Aufnahme der Feststellschraube aufweisen.

## Beschreibung

Die Erfindung betrifft eine Reinigungseinrichtung für Zylinder, insbesondere mit Innen- oder Außengewinde gemäß Oberbegriff des Anspruches 1.

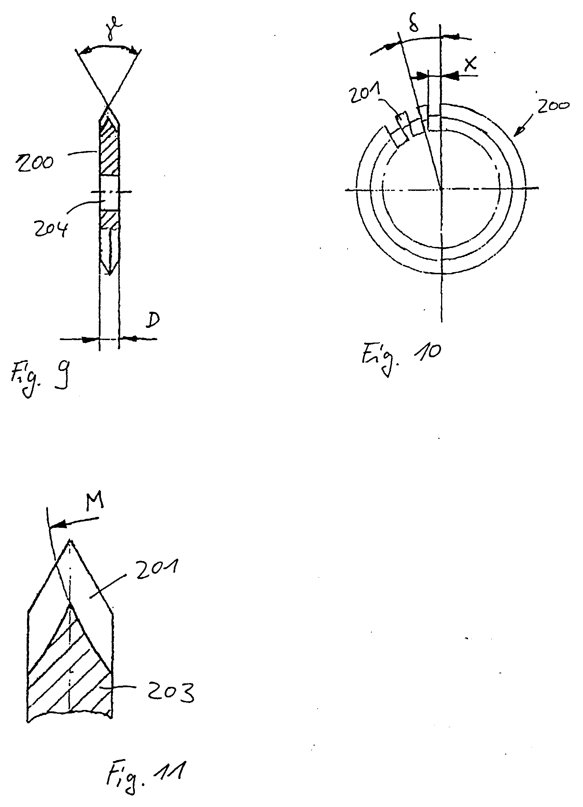

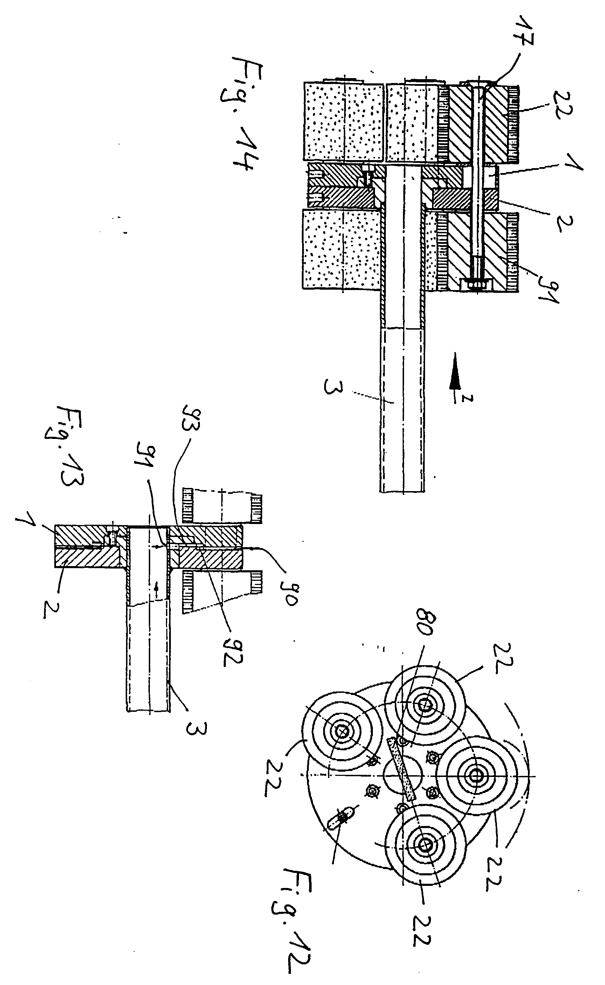

Im Stand der Technik ist es in der DE 40 37 944 A1 beschrieben worden, Innengewinde oder Muttern oder Gewinde-Sacklöcher zu reinigen. Dafür wurden leistenförmige Bürstenelemente verwendet, die in einem Halter leicht auswechselbar angeordnet worden sind, um eine leichte Anpassung an Muttern oder Bolzen unterschiedlichen Durchmessers zu ermöglichen. Der in diesem Stand der Technik beschriebene Bürstenträger mit drei an seinen vorspringenden Ecken angeordneten Rundbürsten ist dort in Figur 8 näher dargestellt. Der Bürstenträger ist als Platte ausgebildet und an einem Rohrkörper drehfest angeordnet. Die Platte weist mehrere Bohrungssätze auf (dort mit 58, 59, 60 bezeichnet), um die Schäfte oder Achsen der Rundbürsten in Stufen an unterschiedliche Durchmesser des Innengewindes anzupassen. Diese stufige Anpassung hat sich in einigen Anwendungsfällen als nachteilig erwiesen, da einerseits die Umstellung auf einen anderen Durchmesser zeitaufwendig ist und andererseits weder Zwischengrößen zu reinigen sind, noch bei einer Abnutzung der Bürsten eine Nachstellung erfolgen kann.

In der DE 295 08 552 wurde vorgeschlagen, mit einer exzentrisch zu der Bürstenachse angebrachten Stelleinrichtung die Bürsten stufenlos in Radialrichtung verstellbar auszuführen. Die Stelleinrichtung ist dabei als Exzentermutter ausgebildet. Mittels der Exzentermutter ist es möglich, jede einzelne der Bürsten auf einen bestimmten radialen Abstand von einer Zentralachse einzustellen. Auch wenn hierdurch gegenüber dem erstgenannten Stand der Technik bereits eine deutliche Verbesserung erzielt wurde, ist die Handhabung immer noch aufwendig, da jede Bürste einzeln eingestellt werden muß. Um einen gleichen radialen Abstand der Bürsten von der Zentralachse zu erreichen, ist hierfür eine gleiche Einstellung der Exzentermutter bei allen Bürsten erforderlich. Wird diese gleiche Einstellung nicht erreicht, so erfolgt eine ungleichmäßige Abnutzung der Bürsten und eine eingeschränkte Reinigungswirkung.

Aufgabe der vorliegenden Erfindung ist es somit, die geschilderten Nachteile des Standes der Technik zu beheben und insbesondere eine schnelle und einfache Verstellbarkeit aller Bürsten der Reinigungseinrichtung bei gleichem radialen Abstand aller Bürsten von der Zentralachse zu ermöglichen, sowie eine gute Reinigung der Zylinder mit und/oder ohne Gewinde selbst bei starker Verschmutzung zu erreichen.

Die Aufgabe wird durch die Merkmale des Anspruchs 1 gelöst. Dadurch, daß die Stelleinrichtung zweiteilig ausgebildet ist, wobei ein erster Teil der Bürstenträger und ein zweiter Teil ein Zustellring ist und sowohl Bürstenträger als auch Zustellring jeweils ein im Winkel zueinander versetztes Langloch aufweist, ist durch ein Verdrehen von Bürstenträger und Zustellring ein unterschiedlicher radialer Abstand einer Durchtrittsöffnung beider Langlöcher von der Zentralachse gegeben. In dieser gemeinsamen Durchtrittsöffnung ist die Feststellschraube aufgenommen. Mittels der Feststellschraube ist eine Rundbürste an dem Bürstenträger befestigt. Bei einem Verdrehen von Zustellring und Bürstenträger wandert die gemeinsame Durchtrittsbohrung mehr oder weniger weit von der Zentralachse in radialer Richtung weg. Damit ist der radiale Abstand der an der Feststellschraube befestigten Rundbürste einstellbar. Befinden sich mehrere dieser Langlöcher gleichmäßig am Umfang der Reinigungseinrichtung verteilt und jeweils in gleichem Abstand von der Zentralachse angeordnet, so sind alle Bürsten, welche in den jeweils zwei Langlöchern befestigt sind, in gleichem Abstand von der Zentralachse. Eine Einstellung der Bürsten erfolgt dann dadurch, daß durch ein teilweises Lösen der Feststellschraube Zustellring und Bürstenträger gegeneinander verdreht werden und alle am Umfang der Reinigungseinrichtung befindlichen Bürsten ihren radialen Abstand von der Zentralachse gleichmäßig verändern. Nach der Verstellung des Abstandes ist durch ein Festdrehen der Feststellschraube die Lage des Bürstenträgers und des Zustellrings zueinander fixierbar, wodurch die Reinigungseinrichtung für die Reinigung eines Gewindes einsetzbar ist.

Als besonders vorteilhaft hat sich erwiesen, wenn das Langloch des Bürstenträgers eine radial zur Zentralachse angeordnete Längsachse aufweist. Dadurch ist eine Verstellung des radialen Abstandes der Bürsten von der Zentralachse durch eine nur geringe Verdrehung von Bürstenträger und Zustellring ermöglicht.

Sind die Längsachsen der beiden Langlöcher in einem Winkel größer als 90° zueinander angeordnet, so ist eine einfache Verstellung ohne Verhaken von Bürstenträger und Zustellring möglich.

Ist die radiale Erstreckung der Langlöcher jeweils im wesentlichen gleich, so wird eine geringe Baugröße von Bürstenträger und Zustellring bei maximal möglicher radialer Verstellung der Bürsten gewährleistet.

Sind die Langlöcher gleichmäßig am Umfang des Bürstenträgers bzw. des Zustellringes verteilt angeordnet, so wird eine gute BearbeitungZylinders, insbesondere des Gewindes sichergestellt, da die Reinigungseinrichtung mit einer gleichmäßigen Kraftverteilung auf das Gewinde aufgezogen wird und für eine gute Reinigungswirkung bei gleichzeitig minimalem Kraftaufwand sorgt.

Weist die der Bürste zugewandte Fläche des Bürstenträgers bzw. des Zustellringes einen Winkel von kleiner als 90° auf, so ist insbesondere bei Außengewinden mit aufgesetzter Mutter eine sehr intensive Reinigung des Gewindes bis in unmittelbare Nähe der Mutter ermöglicht. Als besonders vorteilhaft hat sich ein Winkel von 85° erwiesen. Derselbe Vorteil wird auch dadurch erreicht, daß die Achse der Feststellschraube zur Zentralachse einen Winkel von weniger als 20°, vorzugsweise 5° einschließt.

Um eine schnelle, einfache und ohne großen Werkzeugaufwand ermöglichte Verstellung der Bürsten zu ermöglichen, ist es vorteilhaft, wenn eine Mutter der Feststellschraube in einer Nut des Bürstenträgers oder des Zustellringes verdrehsicher geführt ist.

Zur wiederholgenauen Einstellung des radialen Abstandes der Bürsten von der Zentralachse ist es vorteilhaft, wenn am Bürstenträger und am Zustellring und/oder an der Mutter und der Nut einander zugeordnete Markierungen angeordnet sind. Anhand dieser Markierungen ist die Grundeinstellung auf einen bestimmten Durchmesser des Zylinders oder des Gewindes oder auf einen bestimmten Abnutzungsgrad der Bürsten einstellbar.

Für eine verdrehsichere Verbindung von Bürstenträger und Zustellring ist es vorteilhaft, wenn Bürstenträger und Zustellring mittels der Feststellschrauben für die Bürsten gegeneinander gepreßt werden.

Insbesondere für Reinigungseinrichtungen für Hohlzylinder, insbesondere mit Innengewinde ist es vorteilhaft, wenn eine Absaugeinrichtung der Reinigungseinrichtung zugeordnet ist. Mittels dieser Absaugeinrichtung wird besonders bei Sacklöchern eine Ablagerung des gereinigten Schmutzes im Sackloch vermieden.

Zum Betreiben der Reinigungseinrichtung ist ein Antriebszapfen vorgesehen, welcher mit einem Motor verbunden ist. Der Antriebszapfen kann entweder direkt an einem Motor angeflanscht sein, oder über ein zwischengeschaltetes Getriebe in seiner Drehzahl gegenüber der Motordrehzahl verändert sein.

Als besonders vorteilhaft hat sich erwiesen, wenn Bürsten unterschiedlicher Form am Umfang des Bürstenträgers angeordnet sind. Als sehr gute Kombination hat sich die Anordnung von zylindrischen und konischen Bürsten erwiesen. Konische Bürsten sind hierbei in der Lage, die Gewindegänge vorzureinigen bzw. bis nahe an die Muttern zu reinigen, während die zylindrischen Bürsten die Funktion einer Nachreinigung bzw. eine Transportreinigung der Reinigungseinrichtung entlang des Gewindes übernehmen können. Um möglichst nahe an eine Mutter heranreinigen zu können, ist es vorteilhaft, wenn der größere Durchmesser der konischen Bürste auf der von der Reinigungseinrichtung abgewandten Seite, das heißt näher an der Mutter angeordnet ist.

Bei einer Reinigungseinrichtung für Außenzylinder, insbesondere mit Außengewinde ist es vorteilhaft, wenn der Zustellring näher an der Bürste angeordnet ist, als der Bürstenträger. Damit ist eine genauere Einstellung des radialen Abstandes der Bürsten von der Zentralachse möglich, da das Langloch des Zustellrings in diesem Falle besser einsehbar ist als das Langloch des Bürstenträgers. Aus demselben Grunde ist es bei einer Reinigungseinrichtung für Hohlzylinder insbesondere mit Innengewinde vorteilhaft, wenn der Bürstenträger näher an der Bürste angeordnet ist als der Zustellring. Auch hier ist eine bessere Einsehbarkeit des Zustellringes bei einer derartigen Anordnung gewährleistet.

Durch den Einsatz einer Bürstenleiste an der Stirnseite der Reinigungseinrichtung wird insbesondere bei Hohlzylindern mit Boden eine Reinigung des Lochbodens erzielt. Die Bürstenleiste bewirkt dabei eine besonders sorgfältige Reinigung des Bodens und somit einen zuverlässigen Einsatz zum Beispiel beim Reinigen von Hydraulikzylindern nach dem Honen.

Wird der Antriebsschaff hohl ausgeführt, so ist die Einführung einer Reinigungsflüssigkeit in den Reinigungsbereich des Zylinders möglich. Insbesondere und besonders vorteilhaft ist es, wenn eine Flüssigkeitsführung in der Stelleinrichtung vorgesehen ist, durch welche die Reinigungsflüssigkeit in den unmittelbaren Bereich der Zylinderwandung geführt wird. Hierdurch ist die Reinigungswirkung am größten. Besonders einfach ist es, wenn die Flüssigkeitsführung nur im Zustellring oder nur im Bürstenträger vorgesehen ist. Um eine besonders hohe Reinigungswirkung zu erzielen, kann es auch vorteilhaft sein, sowohl im Bürstenträger als auch im Zustellring entsprechende Flüssigkeitsführungen vorzusehen.

Besonders hartnäckige Verschmutzungen lassen sich mit einer Reinigungseinrichtung entfernen, welche eine Art Doppelbürsten enthält. Neben der Anordnung der Bürsten auf dem Bürstenträger ist zusätzlich vorgesehen, daß mindestens einer, vorteilhafterweise aber jeder äußeren Bürste eine weitere Bürste im Bereich des Zustellrings zugeordnet wird. Es können dabei auch unterschiedliche Bürsten, zum Beispiel Rundbürsten oder Bürsten mit Stalborsten und Bürsten mit Perlonborsten eingesetzt werden. Rundbürsten haben beispielsweise in einem Winkel von 45° nach vorne gerichtete Borsten an einem Ende. Damit sind Kanten in Sacklöchern besonders gut zu reinigen, da sich die nach vorne stehenden Borsten beim Erreichen des Lochbodens auseinanderspreizen und somit fest in den Kantenbereich drücken.

Für eine besonders gute Reinigung insbesondere von Gewinden haben sich Bürsten mit einem konischen Außenumfang erwiesen. Durch den konischen Außenumfang ist ein sehr gutes Eingreifen der Bürste in die Gewindegänge ermöglicht. Als besonders vorteilhaft haben sich Stahldrahtbürsten erwiesen, welche eine Drahtstärke von 0,3 mm haben.

Speziell für die Einsatzfälle in den erfindungsgemäßen Reinigungseinrichtungen haben sich sogenannte lichte Bürsten als besonders vorteilhaft erwiesen. Derartige lichte Bürsten haben Abstandsscheiben zwischen Bürstenscheiben angeordnet. Dadurch ist ein weniger dichter Besatz der Bürsten mit Drähten gewährleistet.

Als vorteilhaft hat sich eine Konizität der Bürste von weniger als 10° erwiesen. Bei dieser Konizität erfolgte eine sehr gute und intensive Reinigung auch bei sehr stark und hartnäckig verschmutzten Gewindegängen.

Mit der Anordnung eines Fräsers im Bereich einer Bürste wird vorteilhafterweise erreicht, daß selbst hartnäckige Verschmutzungen, wie Lackschichten, aus dem Gewindegang entfernt werden können. Weitere Vorteile sind in der Beschreibung der Ausführungsbeispiele erwähnt.

Im folgenden wird die Erfindung anhand von Ausführungsbeispielen näher erläutert. Es zeigen:
- **Figur 1**: eine Reinigungseinrichtung für Innengewinde mit Absaugung;
- **Figur 2**: eine Draufsicht auf die Reinigungseinrichtung der Figur 1;
- **Figur 3**: einen Schnitt AA aus der Figur 1;
- **Figur 4**: eine Draufsicht auf eine Reinigungseinrichtung mit detaillierter Darstellung der Langlöcher;
- **Figur 5**: einen Schnitt durch eine Reinigungseinrichtung für Außengewinde;
- **Figur 6**: eine Darstellung der Wirkungsweise einer Gewindereinigungseinrichtung für Außengewinde;
- **Figur 7**: einen Schnitt durch eine konische Bürste;
- **Figur 8**: einen Schnitt durch eine Reinigungseinrichtung für Außengewinde mit einem Fräser;
- **Figur 9**: einen Fräser gemäß Figur 8 im Querschnitt;
- **Figur 10**: einen Fräser gemäß Figur 9 in der Seitenansicht;
- **Figur 11**: eine Spitze eines Fräsers im Querschnitt
- **Figur 12**: eine Draufsicht auf eine Reinigungseinrichtung mit einer Bürstenleiste;
- **Figur 13**: einen Schnitt durch eine Reinigungseinrichtung mit einer Flüssigkeitsführung;
- **Figur 14**: einen Schnitt durch eine Reinigungseinrichtung mit Doppelbürsten.

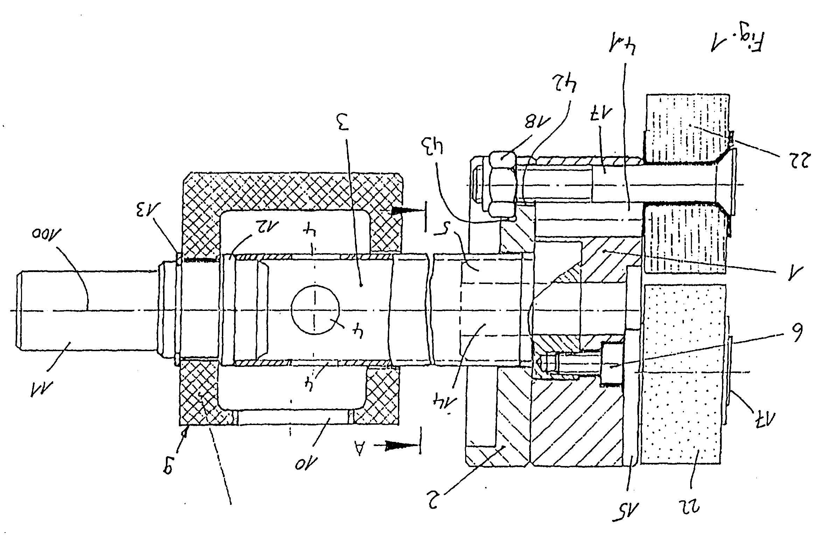

In Figur 1 ist ein Schnitt durch eine Reinigungseinrichtung für Innengewinde dargestellt. Ein Bürstenträger 1 ist mittels Schrauben 6 an einem Antriebsflansch 5 drehfest verbunden. Der Antriebsflansch 5 ist seinerseits ebenfalls drehfest mit einem Antriebsschaft 3 verbunden, welcher eine Verbindung zu einem Antriebszapfen 11 schafft. Der Antriebsschaff 11 ist in nicht dargestellter Weise mit einem Motor verbunden. Die Verbindung erfolgt entweder direkt, indem der Antriebszapfen 11 mit der Antriebswelle des Motors verbunden wird oder indem ein Getriebe zwischen Motor und Antriebszapfen 11 geschaltet ist. Mittels des Motors wird die Reinigungseinrichtung angetrieben, so daß Bürsten 22, welche an dem Bürstenträger 1 befestigt sind, in einer orbitalen Bewegung um eine Zentralachse 100 bewegt werden. Durch diese orbitale Bewegung werden Gewindegänge, in welche die Reinigungseinrichtung eingeführt wurde, gereinigt.

Zur Absaugung von gereinigtem Schmutz in den Innengewinden, insbesondere bei Sacklöchern, ist eine Absaugeinrichtung vorgesehen. Hierzu ist der Antriebsschaft 3 als Rohr ausgebildet. Über eine Bohrung 14, welche in dem Antriebsflansch 5 vorgesehen ist und sich bis in den Bürstenträger 1 hinein erstreckt, wird der Schmutz abgesaugt. Die Absaugung erfolgt über radial gerichtete Öffnungen 4, welche im Bereich einer umlaufenden Kammer 9 vorgesehen sind. Die Kammer 9 weist eine Absaugöffnung 10 auf, welche an eine nicht dargestellte Unterdruckleitung, beispielsweise mittels eines Absaugschlauches, angeschlossen ist Die Kammer 9 ist auf dem Antriebsschaft 3 und dem Antriebszapfen 11 drehbar gelagert. Um die Kammer 9 in axialer Richtung zu fixieren, ist auf dem Antriebszapfen 11 ein Absatz 12, sowie eine Scheibe 13 vorgesehen, zwischen welchen eine Wandung der Kammer 9 drehbar befestigt ist.

Um insbesondere bei Innengewinden mit relativ kleinem Durchmesser eine gute Absaugung des Schmutz:es zu gewährleisten, ist eine Nut 15 in dem Bürstenträger 1 vorgesehen. Mittels der Nut 15 ist ein Weg für die abgesaugten Schmutzpartikel auch dann freigehalten, wenn aufgrund des Innengewindes mit keinem Durchmesser die Bürsten 22 sehr eng aneinander anliegen. Im übrigen wird auch Schmutz, welcher sich erst nach Passieren der Bürsten löst, mittels dieser Nut 15 abgesaugt.

Die Bürsten 22 sind mittels einer Feststellschraube 17 an dem Bürstenträger 1 befestigt. Die Feststellschraube 17 ist in diesem Ausführungsbeispiel als Inbusschraube mit Senkkopf ausgeführt, wodurch es ermöglicht wird, daß mit den Bürsten 22 auch Gewinde in Sacklöchern bis zum Grund des Sackloches gereinigt werden können, da der Kopf der Feststellschraube 17 nur unwesentlich über die Bürsten 22 hinausragt.

Die Feststellschraube 17 ragt einerseits durch die Bürste 22 und andererseits durch den Bürstenträger 1 sowie einen Zustellring 2. Im Bereich des Zustellrings 2 ist die Feststellschraube 17 mit einer Mutter 18 verbunden. Als besonders zweckmäßig sind hierbei Muttern 18, welche selbstsichernd sind, wodurch ein Lösen der Muttern 18 während des Betriebs vermieden werden kann. Die Mutter 18 ist in einer Nut 43 geführt, wodurch eine zusätzliche Sicherung sowie ein einfaches Lösen der Feststellschraube 17 ohne Gegenhaltewerkzeug ermöglicht ist. Die Nut 43 entspricht somit im wesentlichen der Schlüsselweite der Mutter 18, so daß die Mutter 18 in der Wandung der Nut 43 eine Verdrehsicherung findet.

Wesentlich für die Verstellung der Bürsten 22 in ihrem radialen Abstand von der Zentralachse 100 sind Langlöcher 41 und 42, welche in dem Bürstenträger 1 bzw. dem Zustellring 2 angeordnet sind. In dem Bürstenträger 1 ist das Langloch 41 vorgesehen. Das Langloch 41 erstreckt sich in seiner Länge in radialer Richtung des Bürstenträgers 1. Das Langloch 42 ist in dem Zustellring 2 in einem Winkel zu dem Langloch 41 angeordnet. Das Langloch 42 bestimmt den radialen Abstand der Feststellschraube 17 von der Zentralachse 100. Durch ein Verdrehen des Zustellrings 2, welches möglich ist, wenn alle Feststellschrauben 17 gelöst oder zumindest gelockert sind, werden die Langlöcher 41 und 42 gegeneinander verschoben. Dadurch entsteht eine radiale Verschiebung einer gemeinsamen Durchtrittsöffnung, durch welche die Feststellschraube 17 gesteckt ist. Nachdem der gewünschte radiale Abstand der Feststellschraube 17 und damit der Bürste 22 festgelegt ist, wird die Feststellschraube 17 wieder mit ihrer Mutter 18 verbunden bzw. so stark verschraubt, daß der Bürstenträger 1 und der Zustellring 2 aneinandergepreßt werden. Durch dieses Aneinanderpressen wird verhindert, daß der Zustellring 2 weiter verdrehbar ist. Hierdurch wird der radiale Abstand der Zustellschraube 17 und damit der Bürste 22 fixiert. Bei einer gleichmäßigen am Umfang des Bürstenträgers 1 und des Zustellringes 2 verteilten Anordnung der Langlöcher 41 und 42 für jede Feststellschraube 17 und Bürste 22 wird auf diese Art und Weise erreicht, daß alle am Umfang des Bürstenträgers 1 angeordneten Bürsten 22 einen gleichen radialen Abstand von der Zentralachse 100 aufweisen.

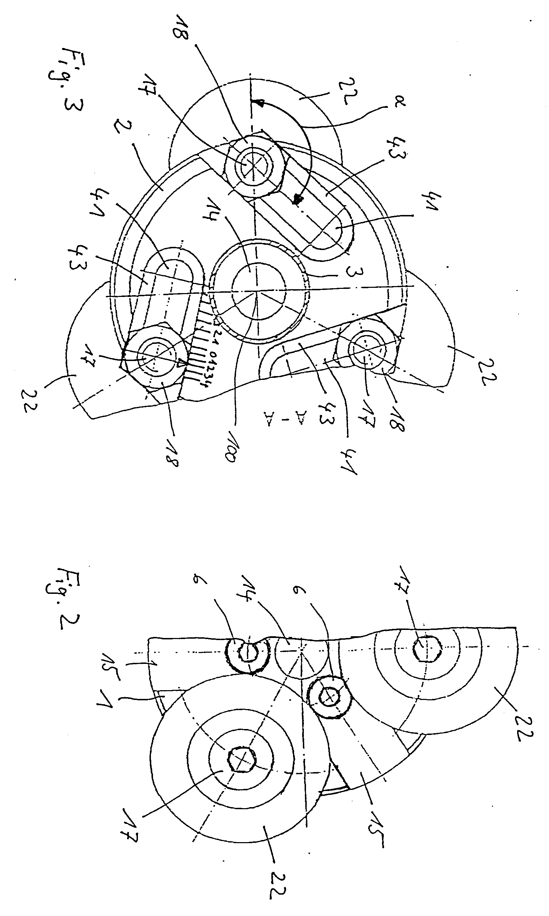

Figur 2 zeigt eine Draufsicht auf eine Reinigungseinrichtung für Innengewinde. Die Bürsten 22 sind gleichmäßig am Umfang verteilt auf dem Bürstenträger 1 angeordnet. Der Bürstenträger 1 ist mittels der Schrauben 6 mit dem nicht sichtbaren Antriebsflansch 5 drehfest verbunden. Zentral ist die Bohrung 14 sichtbar, über welche aus den Gewinden gelöster Schmutz absaugbar ist. Zwischen den Bürsten 22 sind Nuten 15 sichtbar. Über diese Nuten 15 ist eine verbesserte Schmutzabsaugung aus den Gewinden ermöglicht.

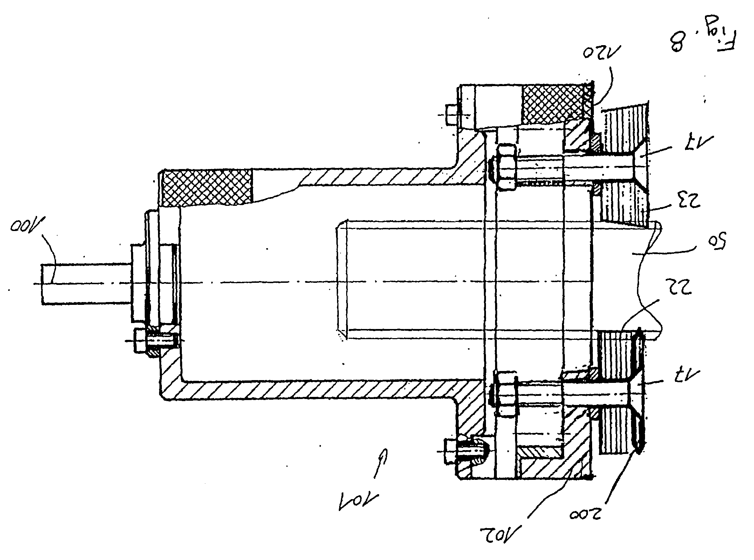

Die Bürsten 22 sind mit den Feststellschrauben 17 an dem Bürstenträger 1 befestigt. Jede der Bürsten hat einen kreisrunden Querschnitt und ragt mit ihrer äußersten Erstreckung über den Bürstenträger 1 hinaus. Damit ist gewährleistet, daß die Innengewinde nicht durch den harten Bürstenträger 1 beschädigt werden, sondern nur von den Bürsten 22 beaufschlagt werden. Für eine gute Bearbeitung der Gewinde und eine sichere und gründliche Reinigung der Gewinde haben sich lichte Bürsten 22 bewährt. Diese Bürsten, wie sie in Figur 7 noch näher erläutert werden, weisen Borsten geringer Dichte auf. Die Borsten sind vorteilhafterweise aus Stahldraht mit Querschnitten zwischen 0,2 und 0,3 mm hergestellt.

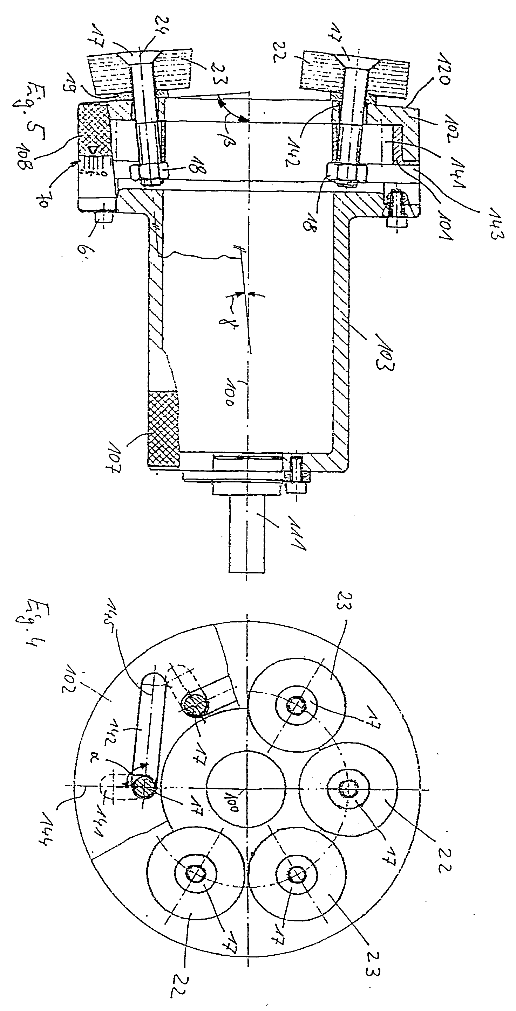

In Figur 3 ist ein Schnitt AA aus Figur 1 dargestellt. Hierbei ist der Antriebsschaft 3 geschnitten gezeichnet. Die Bohrung 14 für die Schmutzabführung ist zentral dargestellt. Die Figur 3 zeigt insbesondere eine Draufsicht auf den Zustellring 2. Auf dem Zustellring 2 sind gleichmäßig am Umfang verteilt 3 Langlöcher 41 angeordnet. Die Langlöcher 41 sind einem Winkel α zum Radius verdreht angeordnet. Der Winkel α beträgt mehr als 90°. Als vorteilhaft haben sich 95 bis 140° erwiesen. Durch diese winklige Anordnung wird durch ein Verdrehen des Zustellrings 2 in Bezug auf den Bürstenträger 1, welcher ein Langloch im wesentlichen in radialer Richtung aufweist, bewirkt, daß die Mutter 18 mit der Feststellschraube 17 in ihrem radialen Abstand von der zur Zentralachse 100 verändert wird. Um einen wiederholgenauen radialen Abstand der Feststellschrauben 17 und damit der Bürsten 22 zu erzielen, ist an mindestens einem Langloch 41 und einer Mutter 18 jeweils eine Markierung angebracht. Im vorliegenden Fall weist die Mutter 18 eine Pfeilmarkierung auf. Am Rande des Langloches 41 ist eine Strichmarkierung vorgesehen, welche beispielsweise mit Zahlen versehen ist. Anhand der Zuordnung der Striche zu der Pfeilmarkierung der Mutter 18 ist eine wiederholgenaue Einstellung der Bürsten 22 möglich. Es genügt im allgemeinen an einem einzigen Langloch 41 und einer Mutter 18 eine derartige Markierung anzubringen, da durch eine Verdrehung von Zustellring 2 und Bürstenträger 1 selbständig alle drei Bürsten in ihrem radialen Abstand zur Zentralachse 100 gleichmäßig verstellt werden. Dies ist auch der besondere Vorteil der hier vorliegenden Erfindung.

Die Langlöcher 41 sind umrandet mit einer Begrenzung einer Nut 43. Die Begrenzung der Nut 43 weist einen Abstand auf, welcher im wesentlichen der Schlüsselweite der Mutter 18 entspricht. Hierdurch wird gewährleistet, daß die Mutter 18 seitlich geführt wird und dadurch kein weiteres Werkzeug zum Verstellen des radialen Abstandes der Mutter 18 von der Zentralachse 100 beim Lösen und Festziehen von Mutter 18 und Schraube 17 erforderlich ist.

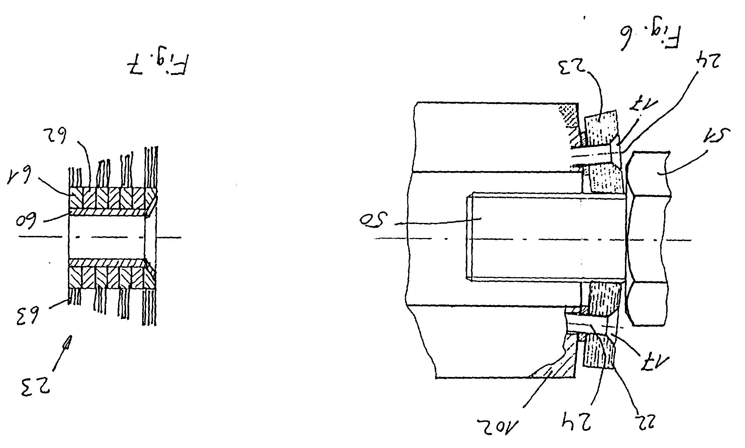

Figur 4 zeigt eine Draufsicht auf eine Reinigungseinrichtung für Außengewinde. Gleichmäßig am Umfang der Einrichtung verteilt sind Bürsten 22 und 23 in abwechselnder Reihenfolge. Bürste 22 ist von zylindrischer Art, während Bürste 23 von konischer Art ist. Bei der Reinigungseinrichtung für Außengewinde ist der Zustellring im Gegensatz zu den Ausführungsbeispielen der Figuren 1 bis 3 näher an den Bürsten angeordnet als der Bürstenträger 1. Dadurch ist eine bessere Einstellbarkeit und bessere Sichtkontrolle über die richtige Einstellung des radialen Abstandes der Bürsten 22, 23 möglich.

Anhand eines Ausschnittes in der Figur 4 ist die Wirkungsweise der Langlöcher 141 und 142 deutlich. In dem verdeckten Bürstenträger 101 (Figur 5) ist das Langloch 141 angeordnet. Das Langloch 141 ist in diesem Ausführungsbeispiel in radialer Richtung mit ihrer Längsachse 144 ausgerichtet. Es ist aber auch ein winkliger Versatz zur radialen Ausrichtung möglich.

In einem Winkel α, welcher größer als 90° ist, sind die Längsachsen 144 und 145 der Langlöcher 141 und 142 einander zugeordnet. Das Langloch 142 ist in dem Zustellring 102 angeordnet. Die beiden Langlöcher 141 und 142 haben einen gemeinsamen Bereich, welcher eine gemeinsame Durchtrittsöffnung für die Feststellschraube 17 bildet. Durch Verdrehen des Zustellrings 102 und des Bürstenträgers 101 gegeneinander wandert die gemeinsame Durchtrittsöffnung der Langlöcher 141 und 142 radial nach außen. Damit wandern auch die an der Feststellschraube 17 befestigten Bürsten 22 und 23 radial nach außen. Hierdurch ist die Reinigungseinrichtung auf verschiedene Außendurchmesser der Gewinde einstellbar. Die Zuordnung der Langlöcher 141 und 142 ist für jede der Feststellschrauben 17 der am Umfang angeordneten Bürsten 22 und 23 vorgesehen. Dadurch ist es möglich, daß eine exakte Einstellung aller Bürsten 22 und 23 mit einer Verdrehung von Bürstenträger 101 und Zustellring 102 ermöglicht wird.

Figur 5 zeigt einen Schnitt durch eine Reinigungseinrichtung für Außengewinde. Ein Antriebsschaft 103 kann über einen Antriebszapfen 11 motorisch angetrieben werden. Der Antriebsschaft 103 ist als Hohlkörper ausgebildet, so daß ein gereinigter Gewindezapfen in diesem Hohlkörper aufgenommen werden kann. An dem Antriebsschaft 103 ist ein Bürstenträger 101 mittels Schrauben 6 befestigt. Der Bürstenträger 101 weist radial ausgebildete Langlöcher 141 auf. Diese Langlöcher 141 korrespondieren mit Langlöchern 142 in einem Zustellring 102. In der gemeinsam gebildeten Öffnung steckt eine Feststellschraube 17, welche mittels einer Mutter 18 befestigt ist. Die Mutter 18 ist mittels einer Nut 143 und deren Begrenzungsfläche verdrehsicher, aber radial in den beiden Langlöchern 141 und 142 verschieblich angeordnet.

Zum Verschieben von dem Bürstenträger 101 gegenüber dem Zustellring 102 sind Rändelungen 107 und 108 vorgesehen. An diesen Rändelungen 107 und 108 kann die Reinigungseinrichtung gut ergriffen werden und gegeneinander verdreht werden. Zur wiederholgenauen Einstellung eines radialen Abstandes der Bürsten 22 und 23 von der Zentralachse 100 sind Markierungen 70 an dem Außenumfang des Zustellrings 102 und des Bürstenträgers 101 angeordnet. Anhand der Markierungen ist eine bestimmte radiale Einstellung einfach einzustellen.

Bei der dargestellten Reinigungseinrichtung sind die Achsen der Bürsten 22 und 23 nicht parallel zur Zentralachse 100 ausgerichtet. Durch die Neigung der Achsen 24 in Bezug auf die Zentralachse 100 im Winkel β wird eine besonders gute und intensive Reinigung der Gewindegänge ermöglicht. Insbesondere in Verbindung mit einer konisch geformten Bürste 23 ist eine Reinigung eines Gewindeganges bis unmittelbar zu einer aufgeschraubten Mutter möglich. Als besonders vorteilhaft hat sich ein Winkel γ im Bereich von 5° erwiesen. Die Einstellung der schräggestellten Bürsten mittels der Feststellschrauben 17 ist besonders einfach dadurch zu erreichen, daß die Stirnseite des Zustellringes 102 eine Fläche 120 aufweist, welche nicht im rechten Winkel zur Zentralachse 100 angeordnet ist. Für eine plane Auflage der Bürsten 22 und 23 hat sich ein Winkel β im Bereich von 85° als vorteilhaft erwiesen. Damit ist eine sehr intensive Reinigung der Außengewinde ermöglicht.

Für eine sichere Befestigung der Bürsten 22 und 23 ist eine Hülse 19 zwischen der Bürsten 22, 23 und der Fläche 120 vorgesehen. Damit ist auch nach längerem Betrieb eine gute Verstellbarkeit der Bürsten in ihrem radialen Abstand zur Zentralachse 100 gewährleistet, da sich keine abstehenden Borsten der Bürste 22, 23 auf der Fläche 120 verkrallen.

Durch die kombinierte Anordnung von zylindrischen Bürsten 22 und konischen Bürsten 23 ist eine besonders gute Reinigung eines Außengewindes gegeben. Während die zylindrischen Bürsten insbesondere in dieser schräggestellten Anordnung dafür sorgen, daß die Reinigungseinrichtung auf das Gewinde sozusagen aufgeschraubt wird, sorgt die konische Bürste 23 dafür, daß der Gewindegang, welcher der Mutter am nächsten kommt, auch gereinigt wird, ohne daß die Feststellschraube 17 an die Mutter anstößt. Damit wird ein besonderer Vorteil der Erfindung erzielt.

In Figur 6 ist schematisch eine Reinigung eines Außengewindes mit aufgeschraubter Mutter dargestellt. Durch die Schrägstellung der Achsen 24 und der Feststellschrauben 17 wird bei der Kombination von zylindrischen und konischen Bürsten 22 und 23 die Reinigung des Gewindes bis unmittelbar vor die aufgeschraubte Mutter 51 der Schraube 50 sichergestellt. Durch die Schrägstellung der Achsen 24 greifen insbesondere die konisch geformten Bürsten 23 bis an die Mutter 51 heran, ohne daß die Köpfe der Feststellschrauben 17 an die Mutter 51 anstoßen. Durch die Konizität der Bürste 23 wird der letzte Gewindegang bis tief in seinen Grund hinein gereinigt.

Figur 7 zeigt eine sogenannte lichte Bürste mit konischer Form. Auf eine Hülse 60 sind verschiedene Scheiben aufgefädelt. In dem vorliegenden Ausführungsbeispiel sind abwechselnd Scheiben 62 mit Bürstenscheiben 61 aufgefädelt. Durch die Scheiben 62 werden Abstände zwischen den Bürstenscheiben 61 geschaffen, wodurch Borsten 63 weniger dicht längs dem Umfang der Bürste 23 besetzt sind. Die Bürste 23 ist in ihrer Lichtheit variierbar, indem unterschiedlich dicke Scheiben 62 Verwendung finden. Zur Erstellung einer konischen Außenform der Bürste 23 werden Bürstenscheiben 61 mit unterschiedlichen Außendurchmessern verwendet. Durch die ansteigenden Außendurchmesser der aufeinanderfolgenden Bürstenscheiben 61 wird insgesamt eine konische Form der Bürste 23 erhalten. Als besonders vorteilhaft hat sich eine Konizität von weniger als 10° herausgestellt.

Figur 8 zeigt einen Querschnitt durch eine Reinigungseinrichtung 101 für Außengewinde mit konischen und zylindrischen Bürsten 22 und 23. Auf der zylindrischen Bürste 22 ist in axialer Richtung von der Reinigungseinrichtung 101 entfernt ein Fräser 200 konzentrisch mit der Bürste 22 angeordnet. Der Fräser 200 ist gemeinsam mit der Bürste 22 mittels der Feststellschraube 17 befestigt. Die vorliegende Reinigungseinrichtung 101 weist einen Zustellring 102 auf, welcher eine rechtwinklig zur Zentralachse 100 angeordnete Fläche 120 aufweist. Das selbständige Aufziehen der Reinigungseinrichtung 101 auf die Schraube 50 bewirkt bei dieser Vorrichtung hauptsächlich der Fräser 200, welcher in dem Gewindegang läuft. Der Fräser 200 bewirkt in besonders vorteilhafterweise, daß der Gewindegang sehr gründlich gereinigt wird. Sogar Farbreste, welche sich in dem Gewindegang befinden, werden durch den Fräser 200 entfernt. Durch die Anordnung auf der von der Gewindereinigungsvorrichtung 101 abgewandten Seite der Bürste 22 wird gewährleistet, daß die Reinigung des Gewindes bis unmittelbar vor die aufgeschraubte Mutter oder den Schraubenkopf erfolgt. Die unmittelbar im Anschluß an den Fräser 200 angeordnete Bürste 22 stützt den Fräser 200 und verhindert zuverlässig ein Abbrechen der Zähne. Außerdem wird der Gewindegang im Anschluß an den Fräser 200 sorgfältig von schon abgelösten Material gereinigt. Diese Reinigungswirkung verstärkt zusätzlich die Anordnung von konischen Bürsten 23. Diese konischen Bürsten 23 sind abwechselnd mit den zylindrischen Bürsten 22 gleichmäßig am Umfang der Gewindereinigungsvorrichtung 101 angeordnet. Durch die bevorzugt eingreifenden Spitzen der Bürste 23 wird eine gründliche Reinigung des Gewindeganges bewirkt. Hinsichtlich der Anordnung des Fräsers 200 genügt es im allgemeinen, daß pro Reinigungseinrichtung 101 lediglich ein Fräser 200 auf einer der mehreren zylindrischen Bürsten 22 angeordnet ist. Dieser eine Fräser 200 ist im allgemeinen ausreichend für die Reinigung des Gewindeganges und für das Aufziehen der Reinigungseinrichtung 101 auf das Gewinde 50, es können aber auch mehrere Fräser 200 eingesetzt werden. Ebenso kann der Fräser 200 auch einer konischen Bürste 23 zugeordnet sein. Der Fräser 200 kann bei einer Reinigungseinrichtung für Innen- und für solche für Außengewinde eingesetzt werden.

In Figur 9 ist ein Querschnitt durch einen Fräser 200 dargestellt. Zentrisch befindet sich eine Bohrung 204, welche zur Aufnahme auf der Feststellschraube 17 dient. Der Umfang des Fräsers 200 ist im Querschnitt spitz ausgebildet. Als Winkel γ der Spitze des Fräsers 200 hat sich ein Winkel von 60° bewährt. Damit wird sichergestellt, daß eine Reinigung des Gewindeganges bis zu seinem Grund erfolgen kann. Um einerseits eine Stabilität zu erhalten, welche einen hohen Verschleiß des Fräsers 200 verursachen würde, und andererseits sicherstellt, daß der Gewindegang bis unmittelbar vor die Mutter oder den Gewindekopf gereinigt werden kann, hat sich eine Dicke D des Fräsers von etwa 4 mm gewährt.

Figur 10 zeigt eine Seitenansicht des Fräsers 200 mit einem schematisch dargestellten Ausschnitt von Zähnen 201. Beim vorliegenden Ausführungsbeispiel sind 24 Zähne 201 gleichmäßig am Umfang angeordnet. Es ergibt sich damit ein Winkel δ von 15° zwischen den Zähnen 201. Die Zähne 201 weisen jeweils einen Abstand X von etwa 2,8 mm auf. Der Abstand X wird bei der Herstellung mittels eines Fräsers erzeugt, welcher vorzugsweise einen Durchmesser M von etwa 200 mm aufweist. Dies ist aus Figur 11 deutlich ersichtlich. Durch den dadurch entstandenen spitzen Zahngrund 203 wird einerseits eine Stabilität des Zahnes 201 erreicht und andererseits eine gute Abführung des aus dem Gewindegang geförderten Schmutzes bewirkt.

Die Form eines geeigneten Fräsers ergibt sich im wesentlichen aus der Form des Gewindeganges. Es sind somit auch andere Formen des Fräsers gemäß der vorliegenden Erfindung einsetzbar, auch wenn sich der hier dargestellte und beschriebene Fräser als besonders vorteilhaft erwiesen hat.

Um eine besonders gründliche Reinigung eines Sackloches zu bewirken, ist eine Bürstenleiste 80 vorgesehen. Die Bürstenleiste 80 ist an der Stirnseite der Reinigungseinrichtung zwischen im wesentlichen einander gegenüberstehenden zylindrischen Bürsten 22 angeordnet. Die Bürstenleiste 80 weist Borsten auf, welche in axialer Richtung der Reinigungseinrichtung angeordnet sind und den Grund eines Sackloches reinigen, sobald die Reinigungseinrichtung entsprechend tief in das Sackloch eingeführt ist. Um einen möglichst großen Reinigungsbereich abzudecken, kann es vorgesehen sein, daß, wie in Figur 12 angedeutet, die Bürstenleiste 80 nicht symmetrisch zur Längsachse der Reinigungseinrichtung angeordnet ist, sondern derart versetzt ist, daß sie einerseits die engste Stellung der Bürsten 22 nicht behindert aber in dieser engsten Stellung der Bürsten 22 den vorhandenen Raum möglichst vollständig ausnutzt. Hierzu ist die Bürstenleiste 80 in den Spalt zwischen zwei Bürsten 22 hineinreichend angeordnet.

Figur 13 zeigt einen Schnitt durch eine Reinigungseinrichtung, welche einen hohen Antriebsschaft 3 aufweist. Der Antriebsschaff 3 ist an seinem äußeren Ende verschlossen, weist aber im Bereich seines Endes eine Öffnung 91 auf, durch welche eine im Antriebsschaff 3 eingeführte Flüssigkeit aus dem Antriebsschaft 3 austreten kann. Zwischen der Öffnung 91 und einer Ringnut 92 ist eine Verbindung 93 vorgesehen, durch welche die Flüssigkeit in die Ringnut 92 eintreten kann. Von der Ringnut 92 geht wenigstens eine, vorteilhafterweise aber mehrere, Flüssigkeitsführungen 90 in radialer Richtung der Reinigungseinrichtung bis zum äußeren Umfang der Stelleinrichtung. Dort tritt die Flüssigkeit aus der Reinigungseinrichtung aus und bewirkt eine zusätzliche Reinigung des Gewindes bzw. der Zylinderwand. Die Flüssigkeitsführung 90 ist in dem dargestellten Ausführungsbeispiel in dem Bürstenträger 1 als eingefräste Nut vorgesehen. Dies ist eine sehr einfache Art der Herstellung, da lediglich in die Stirnseite des Bürstenträgers 1 eine oder mehrere Nuten eingefräst werden müssen, welche eine Verbindung zu der Ringnut 92 haben. Es sind dabei nicht nur lineare sondern auch gekrümmte Flüssigkeitsführungen 90 möglich, um die Flüssigkeit gezielt auf das Gewinde bzw. die Zylinderwand einwirken lassen zu können. Durch die Verbindung des Bürstenträgers 1 mit dem Stellring 2 wird ein geschlossener Kanal für die Flüssigkeitsführung 90 bewirkt.

Natürlich ist neben dem hier gezeigten Ausführungsbeispiel auch möglich eine direkte Verbindung zwischen dem äußeren Umfang der Stelleinrichtung und dem hohlen Antriebsschaft 3 zu schaffen, indem eine Bohrung in dem Bürstenträger 1 und/oder dem Zustellring 2 eingeführt wird.

In Figur 14 ist eine Reinigungseinrichtung mit Doppelbürsten gezeigt. Jeder Bürste 22 ist eine zusätzliche Bürste 91 zugeordnet. Während die Bürste 22 im Bereich des Bürstenträgers 1 angeordnet ist, befindet sich die Bürste 91 im Bereich des Zustellrings 2. Bürste 22 und Bürste 91 sind mittels einer einzigen Feststellschraube 17 verbunden. Mit der Feststellschraube 17 wird sowohl die Fixierung der Stellvorrichtung als auch der Bürsten 22 und 91 bewirkt. Besonders vorteilhaft ist es, wenn wie im hier dargestellten Beispiel jeder Bürste 22 eine Bürste 91 zugeordnet ist. Es kann aber auch ausreichend sein, daß nur eine Bürste 91 oder nur eine geringere Anzahl von Bürsten 91 im Vergleich zu den eingesetzten Bürsten 22 vorgesehen ist. Die Bürsten können Borsten mit unterschiedlichem Material aufweisen. So kann es vorteilhaft sein für die Vorreinigung Stahlborsten auf den Bürsten 22 und für die Nachreinigung Perlonborsten auf den Bürsten 91 zu verwenden. Sind die Bürsten 22 Rundbürsten mit winkelig nach vorne gerichteten Borsten, so ist eine besonders gute Reinigung der Kanten zwischen Hohlzylinder und Zylinderboden , insbesondere von Zunderresten oder Honflüssigkeit möglich.

Es hat sich auch als vorteilhaft erwiesen, derartige Doppelbürsten bei Reinigungseinrichtungen einzusetzen, welche lediglich für einen Durchmesser vorgesehen sind und somit keine Stelleinrichtung aufweisen.

Die vorliegende Erfindung ist nicht auf die dargestellten Ausführungsbeispiele beschränkt. Insbesondere Kombinationen der dargestellten und beanspruchten Reinigungseinrichtung fallen ebenfalls unter den Schutz.

## Patentansprüche

1. Reinigungseinrichtung für Zylinder, insbesondere mit Innen- oder Außengewinde, bei der mehrere Rundbürsten (22,23) mittels jeweils einer Feststellschraube (17) an einem Bürstenträger (1;101) auswechselbar angeordnet sind, der Bürstenträger (1;101) um eine Zentralachse (100) drehbar ist, wobei die Bürsten (22,23) eine Orbitalbewegung um die Achse (100) beschreiben und die Bürsten (22,23) mittels einer Stelleinrichtung in Radialrichtung stufenlos verstellbar sind, dadurch gekennzeichnet, daß die Stelleinrichtung zweiteilig ausgebildet ist, wobei ein erster Teil der Bürstenträger (1;101) und ein zweiter Teil ein Zustellring (2;102) ist und sowohl Bürstenträger (1;101) als auch Zustellring (2;102) jeweils ein im Winkel zueinander versetztes Langloch (41,42;141,142) zur Aufnahme der Feststellschraube (17) aufweisen.

2. Reinigungseinrichtung nach Anspruch 1, dadurch gekennzeichnet, daß das eine Langloch (41; 141) eine radial zur Zentralachse (100) angeordnete Längsachse (44;144) aufweist, und daß eine Längsachse (45;145) des anderen Langloches (42;142) in Bezug auf die Längsachse (44;144) des Langloches (41;141) in einem Winkel (α) größer als 90° angeordnet ist..

3. Reinigungseinrichtung nach Anspruch 1 oder 2, dadurch gekennzeichnet, daß die radiale Erstreckung der Langlöcher (41,42;141,142) jeweils im wesentlichen gleich ist.

4. Reinigungseinrichtung nach einem der Ansprüche 1 bis 3, dadurch gekennzeichnet, daß die der Bürste (22,23) zugewandte Fläche des Bürstenträgers (1;101) bzw. des Zustellringes (2;102) einen Winkel (β) von kleiner als 90°, vorzugsweise 85° zur Zentralachse (100) aufweist.

5. Reinigungseinrichtung nach einem der Ansprüche 1 bis 4, dadurch gekennzeichnet, daß die Achse (24) der Feststellschraube (17) zur Zentralachse (100) einen Winkel (γ) von weniger als 20°, vorzugsweise 5° einschließt.

6. Reinigungseinrichtung nach einem der Ansprüche 1 bis 5, dadurch gekennzeichnet, daß Bürstenträger (1;101) und Zustellring (2;102) zur Einstellung des radialen Abstandes der Bürsten (22,23) gegeneinander verdrehbar und insbesondere mittels der Feststellschrauben (17) gegeneinander gepreßt und verdrehsicher zu verbinden sind.

7. Reinigungseinrichtung nach einem der Ansprüche 1 bis 6, dadurch gekennzeichnet, daß der Reinigungseinrichtung zentral eine Absaugeinrichtung zugeordnet ist.

8. Reinigungseinrichtung nach einem der Ansprüche 1 bis 7, dadurch gekennzeichnet, daß die Bürsten (22,23) an ihrem Außenumfang zylindrisch und/oder konisch und/oder kugelig sind.

9. Reinigungseinrichtung nach einem der Ansprüche 1 bis 8, dadurch gekennzeichnet, daß auf dem Bürstenträger (1; 101) eine Bürstenleiste (80) angeordnet ist, deren Borsten sich im wesentlichen in axialer Richtung der Reinigungseinrichtung erstrecken.

10. Reinigungseinrichtung nach einem der Ansprüche 1 bis 9, dadurch gekennzeichnet, daß in der Stelleinrichtung in radialer Richtung eine Flüssigkeitsführung (90) zwischen hohlem Antriebsschaff (3) und äußerem Umfang der Stelleinrichtung vorgesehen ist, und daß die Flüssigkeitsführung (90) im Bürstenträger (1; 101) und/oder Zustellring (2; 102) angeordnet ist..

11. Reinigungseinrichtung nach einem der Ansprüche 1 bis 10, dadurch gekennzeichnet, daß dem Zustellring (2; 102) mindestens eine weitere Bürste (91) zugeordnet ist, so daß zusammen mit der Bürste (22,23) eine Art Doppelbürste entsteht.

12. Reinigungseinrichtung nach einem der Ansprüche 1 bis 11, dadurch gekennzeichnet, daß in axialer Richtung von der dem Bürstenträger (1; 101) abgewandten Seite der Bürste (22; 23) ein Fräser (200) mit im Querschnitt spitz, insbesondere in einem Winkel von 60° zulaufenden Zähnen (201) zugeordnet ist.
